# EUROPEAN PATENT SPECIFICATION

(11) **EP 1 635 339 B1**
(45) Date of publication and mention of the grant of the patent: **11.06.2008**
(21) Application number: 05255457.3
(22) Date of filing: 07.09.2005
(51) Int. Cl.: G11B 7/085, G11B 7/005

(54) **Optical recording apparatus and method for searching data recording locations by controlling tracking level**
Optisches Aufzeichnungsgerät und Verfahren zur Datenspeicherstellensuche durch Steuerung des Spurverfolgungsniveaus
Appareil d'enregistrement optique et procédé de recherche de locations d'enregistrement de donnés par commande de niveau de suivi de piste

(30) Priority: 08.09.2004 KR 2004071697
(43) Date of publication of application: 15.03.2006
(73) Proprietor: Samsung Electronics Co., Ltd., Suwon-si, Gyeonggi-Do (KR)
(72) Inventor: Kim, Min-seok, Yeongtong-gu, Suwon-si,Gyeonggi-do (KR); Ahn, Yong-jin, Seocho-gu, Seoul (KR)
(74) Representative: Robinson, Ian Michael

(56) References cited:
- US-A- 5 631 890
- US-A1- 2001 028 613
- US-B1- 6 552 983

## Description

The present invention relates to an optical recording apparatus and method for recording predetermined data in an optical disk. More particularly, the present invention relates to an optical recording apparatus and method for correctly searching data recording locations by controlling a beam spot.

With the popularization of computers, various peripherals and components that contribute to effective uses of computers and improvement in their performances have rapidly been developed. In particular, various auxiliary storage mediums have been developed and popularized to preserve stored programs or data even when computer power is turned off. Conventionally, magnetic storage mediums, such as a floppy disk and a hard disk, have been widely used as such auxiliary storage mediums. However, recently, optical disk storage mediums including a CD-ROM, a DVD (Digital Video Disk), etc. are widely used to store mass multimedia information.

An optical disk is a recording medium capable of recording and reproducing data using an optical method. In a recording mode, an optical signal is emitted to a predetermined track on an optical disk and thus pits are formed on the predetermined track, thereby recording data of "0" or "1". In a reproducing mode, an optical signal is emitted to the optical disk and a magnitude of reflected light or projected light obtained from the emitted optical signal is measured, thereby reproducing the recorded data.

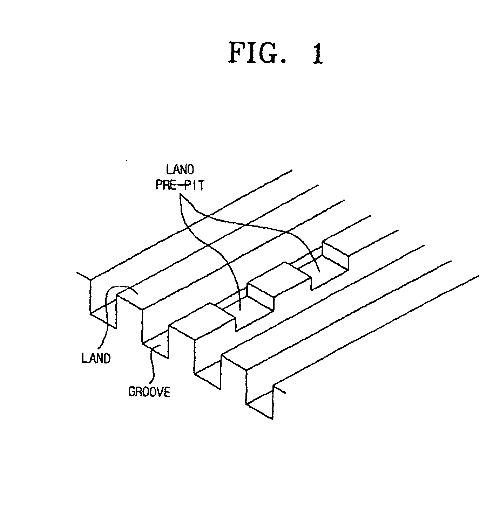

Figure 1 is a cross-sectional view of an optical disk. Referring to Figure 1, on the surface of the optical disk are formed a plurality of depressed groove tracks and a plurality of protruded land tracks. Each groove track is an area on which pits are actually formed, and each land track is formed between groove tracks in order to prevent crosstalk between the neighboring groove tracks. An optical recording/reproducing apparatus records/reproduces data on/from an optical disk by emitting an optical signal to groove tracks of the optical disk using an optical pick-up unit including a light source such as a laser diode.

Meanwhile, when data is recorded on an optical disk, it is basically necessary to search locations at which pits will be formed on the optical disk. In this case, a logical ID (logical Identification) included in data recorded on groove tracks of the optical disk or track address information recorded separately on the optical disk can be checked. In a case of a DVD-RW, such track address information can be recorded on an optical disk, through LPPs (Land Pre-Pits) formed on land tracks of the optical disk, or wobbles formed in a corrugated pattern on the surface of the optical disk, etc.

Meanwhile, a general optical recording/reproducing apparatus supports a tracking function so that an optical pickup unit emits an optical signal to groove tracks of an optical disk while constantly moving along the groove tracks storing data. The tracking function is a function for changing the location of the optical pickup unit if a beam spot deviates above a predetermined distance from a track center, thereby preventing the beam spot from deviating from the corresponding track.

Accordingly, since a beam spot moves along a center line of a groove track, the beam spot may not sense LPPs, etc. recorded on land tracks. Particularly, if defects such as fingerprints, scratches, black dots, disk distortion, or disk deformation are generated on an optical disk, sensing of LPPs becomes more difficult.

In this case, if data is over-written in an optical disk in which data is already written, it is possible to search a data recording location by checking a logical ID included in the written data. However, if data is first written in an optical disk or if data is written in a DVD-R as a write-once disk, it is impossible to search a data recording location since no logical ID exists. As a result, a problem exists in that, when data is recorded in an optical disk, recording performance is deteriorated.

US 6,552,983 discloses an apparatus and method for detecting abnormal conditions at a time of recording or reproducing information on an information recording medium. This document forms the pre-characterising portion of the claims appended hereto.

According to the present invention there is provided an apparatus and method as set forth in the appended claims. Preferred features of the invention will be apparent from the dependent claims, and the description which follows.

According to an aspect of the present invention, an optical recording apparatus and method is provided capable of searching a data recording location by controlling a tracking level of an optical signal to swing a beam spot and correctly detecting track address information recorded in an optical disk.

According to an aspect of the present invention, an optical recording apparatus and method is provided capable of correctly searching a data recording location while preventing a beam spot from deviating from a corresponding track by controlling a tracking level of an optical signal.

In one aspect of the present invention, there is provided an optical recording apparatus, comprising: an optical pickup unit which emits an optical signal to a predetermined track on an optical disk and detects reflection light; an optical pickup controller which controls a location of the optical pickup unit so that the optical signal is emitted on the track based upon a predetermined tracking level on the track; and a track address detector which extracts track address information of the track from an electrical signal proportional to light intensity of the reflection light; characterized by: a controller which, if no track address information is detected in a predetermined time by the track address detector, changes the tracking level and then controls the optical pickup controller to emit the optical signal a predetermined distance further toward the track address information based upon the changed tracking level.

According to an aspect of the present invention, the controller controls the optical pickup controller to check the track address information, to decide a data recording location on the optical disk based on the track address information, and to emit the optical signal to the data recording location, and to thereby record predetermined recording data in the data recording location.

According to an aspect of the present invention, the optical recording apparatus further comprises: a tracking error detector which measures a magnitude of the electrical signal proportional to the light intensity of the reflection light and determines whether a beam spot of the optical signal deviates from the track according to the measured result, wherein, if the tracking error detector determines that the beam spot deviates from the track, the controller controls the optical pickup controller to move the beam spot inside the track.

Meanwhile, the track address information may be a LPP ID recorded by a LPP (Land Pre-Pit) formed on a land track of the optical disk.

In this case, the controller moves the tracking level by a predetermined distance toward the LPP so that the optical signal is emitted to the LPP.

Also, the optical recording apparatus further includes: a signal processor which reproduces data recorded on a groove track of the optical disk from the reflection light. In this case, if a logic ID indicating an address of the track is included among data reproduced by the signal processor, the controller can decide the data recording location using at least one of the logical ID and the LPP ID.

Meanwhile, according to another aspect of the present invention, there is provided a data recording method, comprising: emitting an optical signal along a predetermined tracking level on a track of an optical disk and detecting reflection light; determining whether track address information recorded on the optical disk is detected from the reflection light; characterized by: changing the tracking level if no track address information is detected; emitting the optical signal along the changed tracking level a predetermined distance further toward the track address information and determining whether the track address information is detected; checking the track address information if the track address information is detected; and deciding a data recording location based on the track address information, and then recording predetermined data in the decided data recording location.

According to an aspect of the present invention, the data recording method further includes: determining whether a beam spot of the optical signal deviates from the track; and if it is determined that the beam spot deviates from the track, changing a location to which the optical signal is emitted so that the beam spot is located inside the track.

According to an aspect of the present invention, the data recording method further includes: processing the reflection light and detecting data recorded on the optical disk; determining whether a logical ID indicating an address of the track is in the detected data; and if it is determined that the logical ID is in the detected data, deciding the data recording location using the logical ID.

Meanwhile, the track address information may be a LPP ID recorded by a LPP (Land Pre-Pit) formed on a land track of the optical disk. In this case, the tracking level is moved by a predetermined distance toward the LPP so that the optical signal is emitted to the LPP.

Additional aspects and/or advantages of the invention will be set forth in part in the description which follows and, in part, will be apparent from the description, or may be learned by practice of the invention.

The above aspects and features of the present invention will be more apparent by describing certain embodiments of the present invention with reference to the accompanying drawings, in which:
Figure 1 is a cross-sectional view of an optical disk;
Figure 2 is a block diagram showing the configuration of an optical recording apparatus according to an embodiment of the present invention;
Figure 3 is a view for explaining a process in which the optical recording apparatus of Figure 2 controls a location of a beam spot through the control of a tracking level;
Figure 4 is a block diagram showing the configuration of a track address detector used in the optical recording apparatus of Figure 2;
Figure 5 is a block diagram showing the configuration of an optical recording apparatus according to another embodiment of the present invention; and
Figure 6 is a flowchart illustrating a data recording method according to an embodiment of the present invention.

Hereinafter, embodiments of the present invention will be described in detail with reference to the appended drawings.

In the following description, same drawing reference numerals are used for the same elements even in different drawings. The matters defined in the description such as a detailed construction and elements are provided to assist in a comprehensive understanding of the invention. Thus, it is apparent that the present invention can be carried out without those defined matters. Also, well-known functions or constructions are not described in detail since they would obscure the invention in unnecessary detail.

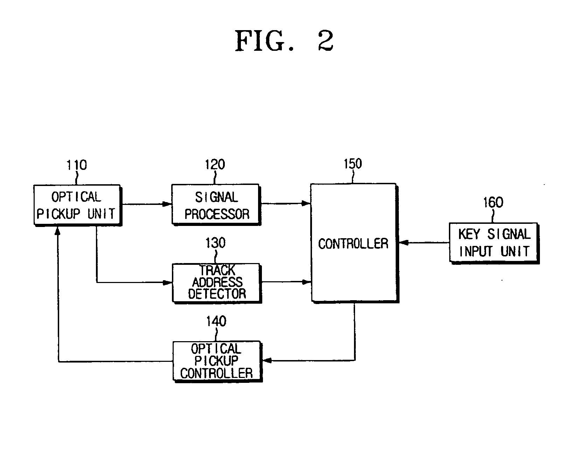

Figure 2 is a block diagram showing the configuration of an optical recording apparatus according to an embodiment of the present invention. Referring to Figure 2, the optical recording apparatus includes an optical pickup unit 110, a signal processor 120, a track address detector 130, an optical pickup controller 140, a controller 150, and a key signal input unit 160.

The optical pickup unit 110 emits an optical signal on an optical disk, thus recording data in the optical disk. Also, the optical pickup unit 110 reads recorded data from an optical disk and outputs data to reproduce the read data. To perform these operations, the optical pickup unit 110 includes a laser diode (not shown) to emit an optical signal of a predetermined magnitude on an optical disk, an objective lens (not shown) to transfer light output from the laser diode to the surface of the optical disk, a focusing actuator (not shown) to up and down drive the objective lens to focus the light on the optical disk, a tracking actuator (not shown) to left and right drive the objective lens to track the light, and a photodiode (not shown) to detect reflection light reflected from the surface of the optical disk.

In a reproducing mode, the signal processor 120 digitalizes reflection light detected by the optical pickup unit 110 and outputs the digitalized result as a reproducible signal. In a recording mode, the signal processor 120 processes predetermined data and converts the processed result to recording data which can be recorded by the optical pickup unit 110.

The optical pickup controller 140 adjusts the location of the optical pickup unit 110. That is, the optical pickup controller 140 emits a driving voltage to the focusing actuator (not shown) or the tracking actuator (not shown) of the optical pickup unit 110 to allow a focusing or tracking operation.

Meanwhile, the key signal input unit 160 receives a data recording command or a data reproducing command from an external source. That is, if a user requests recording or reproducing using a button key or a remote controller provided in a main body, the key signal input unit 160 recognizes the user's request and notifies it to the controller 150.

If the controller 150 receives a data recording command, the controller 150 controls the signal processor 120 to process and convert predetermined data to recording data, and then searches for a location at which the recording data will be recorded in the optical disk. For that, the controller 150, in advance, logically calculates and obtains a next writable address (hereinafter, referred to as NWA).

In the case of a DVD-R/W allowing over-writing, the controller 150 reproduces a recording information area on the optical disk, thus determining whether an area indicated by a NWA is an area in which data is already written or an area in which no data is written. The recording information area is an area in which location information of a track number, a sector number, etc. are recorded. In a DVD-R/RW, the recording information area corresponds to a RMA (Recording Management Area). In a DVD-RAM, the recording information area corresponds to a DTZ (Drive Test Zone). If the area indicated by the NWA is an area in which data is already written, since a logical ID can be included in the existing data, the controller 150 controls the signal processor 120 to detect the logical ID among data reproduced in the corresponding area, thereby searching a data recording area.

Meanwhile, if the area indicated by the NWA is an area in which no data is written or if no logic ID is detected due to any defect although data is written in the area, the controller 150 detects track address information separately recorded in the optical disk, thereby searching for a data recording area.

In this case, the detected track address information can be different according to the type of the optical disk. That is, in a case of a CD-RW which records track location information through fine wobbles of recording tracks, a wobble signal can be the track address information. Meanwhile, in a case of a DVD-RW which records track address information using LPPs (Land Pre-Pits) formed on land tracks, it is possible to search a data recording area by detecting a LPP ID.

Hereinafter, the operation of the optical recording apparatus will be described in detail, wherein a DVD-RW is used. If a NWA is obtained as described above, the controller 150 moves the optical pickup unit 110 near an area indicated by the NWA with reference to corresponding optical disk's physical information written in an internal firmware, etc., and then controls the optical pickup unit 110 to emit an optical signal to the area. In this case, the optical signal is emitted to LPPs formed on land tracks of the optical disk as well as to pits formed on groove tracks of the optical disk. If the optical signal is emitted to the LPPs, a change in light intensity of reflection light occurs and the track address detector 130 senses the change, thus detecting a LPP ID. A method for detecting the LPP ID will be described in detail later.

Meanwhile, if the LPPs are damaged due to the above-described defects, etc. or if the optical disk is distorted, no optical signal may be emitted to the LPPs. In this case, it is impossible to record data in an appropriate data recording location since no LPP ID is detected. If the track address detector 130 detects no LPP ID in a predetermined time, the controller 150 changes a tracking level of an optical signal so that the optical signal can be emitted to adjacent land tracks. In this case, the changed width of the tracking level can be experimentally decided in proportion to the width of the groove track. In a case of a general DVD-RW, since a groove track has a width of about 0.74 µm, the controlled width can be decided to about 0.148 µm corresponding to about 20% of the width of the groove track. It is possible for the tracking level adjustment to be made in variable amount. More specifically, the tracking level is adjustable within a proper range that enables detection of an LPP. For example, the tracking level may be adjusted in incrementing manner within a proper range that does not cause the beam spot to deviate from the track.

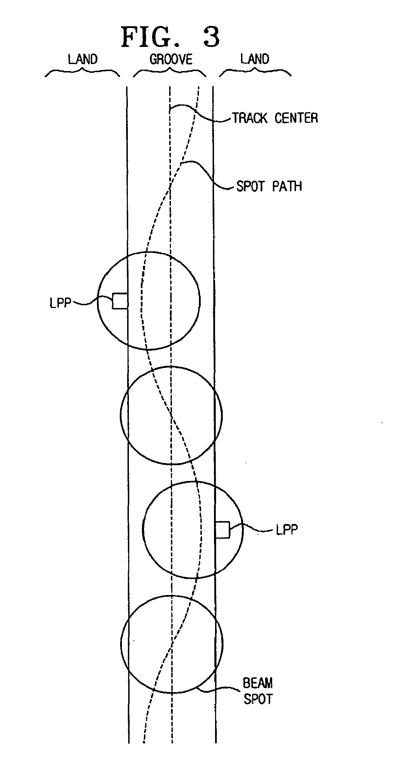

Figure 3 is a view for explaining a process in which the optical recording apparatus of Figure 2 controls a location of a beam spot through the control of the tracking level. Referring to Figure 3, to prevent a beam spot from deviating from a corresponding track, a tracking level which is set to a center of a groove track is basically used. The optical pickup unit 110 emits the optical signal along the tracking level, and the optical pickup controller 140 finely adjusts the tracking actuator of the optical pickup unit 110, thereby preventing the beam spot from deviating from the tracking level. In this state, the controller 150 changes the tracking level if no LPP ID is detected in a predetermined time. That is, the controller 150 moves the tracking level by a predetermined distance toward an LPP formed on an adjacent land track so that the LPP is included in the beam spot. In this manner, it is possible to increase a detection probability of a LPP. Meanwhile, as not shown in Figure 3, by forming each track in a corrugated pattern and detecting a corresponding wobble signal, it is possible to detect track address information. In this case, likewise, by controlling a tracking level, the corresponding wobble signal can be more correctly detected.

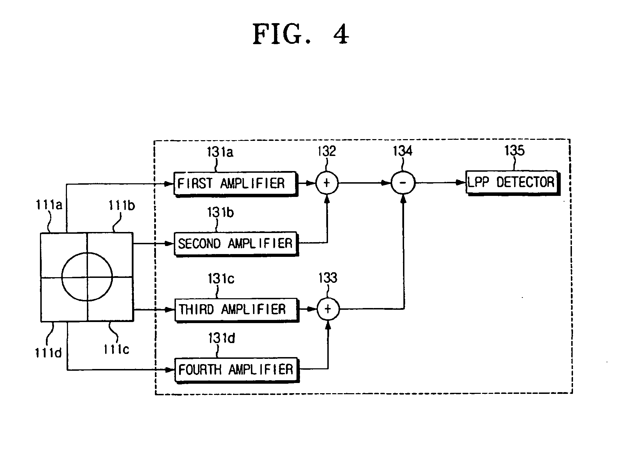

Figure 4 is a block diagram showing the configuration of the track address detector 130 used in the optical recording apparatus of Figure 2. Referring to Figure 4, the track address detector 130 includes first through fourth amplifiers 131a through 131d, a first adder 132, a second adder 133, a subtractor 134, and an LPP detector 135. If electrical signals proportional to light intensity are respectively detected from first through fourth optical detection devices 111a through 111d included in the optical pickup unit 110, the first through fourth amplifiers 131a through 131d amplify the respective detected electrical signals to signals each with a predetermined magnitude. Then, the signals amplified by the first and second amplifiers 131a and 131b are added by the first adder 132 and signals amplified by the third and fourth amplifiers 131c and 131d are added by the second adder 133. If result values output from the adders 132 and 133 are input to the subtractor 134, the subtractor 134 performs a subtraction operation. A result value output from the subtractor 134 is input to the LPP detector 135. The LPP detector 135 compares the result value with a predetermined reference value and outputs a signal of '0' or `1' according to the comparison result, thereby detecting an LPP ID signal.

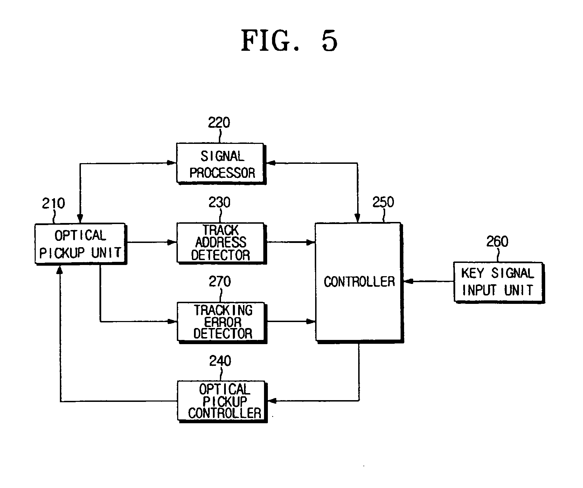

Figure 5 is a block diagram showing the configuration of an optical recording apparatus according to another embodiment of the present invention. Referring to Figure 5, the optical recording apparatus includes an optical pickup unit 210, a signal processor 220, a track address detector 230, an optical pickup controller 240, a controller 250, a key signal input unit 260, and a tracking error detector 270.

In the embodiment shown in Figure 5, the remaining components except for the tracking error detector 270 operate in the same manner as the corresponding components shown in Figure 2, and therefore, detailed descriptions thereof are omitted.

The tracking error detector 270 determines whether a tracking error is generated, wherein the tracking error is generated when a beam spot deviates from its corresponding optical track. That is, if a tracking level is swung by a predetermined width from a track center, a probability of deviating the beam spot from its corresponding track increases. The tracking error detector 270 measures a change in light intensity of reflection light, determines whether a tracking error is generated according to the measured result, and, if it is determined that a tracking error is generated, notifies the determined result to the controller 250.

If the tracking error is generated, the controller 250 controls the optical pickup controller 240 to move the optical pickup unit 210 so that the beam spot is again returned to its initial track location, and then controls the track address detector 230 to detect a track address, such as an LPP ID, a wobble signal, etc.

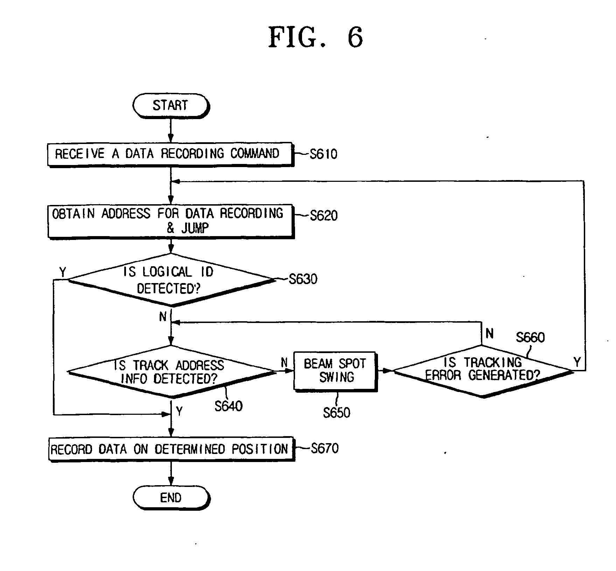

Figure 6 is a flowchart illustrating a data recording method according to an embodiment of the present invention. Referring to Figure 6, if the optical recording apparatus receives a data recording command (S610), the optical recording apparatus logically calculates and obtains a data recording address (S620). In this case, by searching a lead-in area of each track of the optical recording apparatus, it is possible to decide an area in which next data will be recorded. Then, the optical pickup unit 110 or 210 is jumped to near the searched address.

Next, the optical recording apparatus emits an optical signal near the obtained address and determines whether a logical ID is detected (S630). In this case, the optical recording apparatus reproduces data recorded in a recording information area (for example, RMA in a DVD-RW) of the optical disk and thus determines whether data is already recorded in an area corresponding to the address. If data is already recorded in the area, the optical recording apparatus reproduces the recorded data, detects a logical ID from the reproduced data, decides a data recording location, and then records data to be recorded in the data recording location (operation 670).

However, if no data is recorded or if no logical ID is detected due to any physical defect, the optical recording apparatus determines whether track address information, such as an LPP ID or a wobble signal, is detected (S640).

If no track address information is detected in a predetermined time, the optical recording apparatus changes the tracking level to thereby swing the beam spot of the optical signal by a constant width (S650). Accordingly, it is possible to increase a probability that the optical signal will be emitted to an LPP or a wobble, thereby correctly detecting a data recording location.

Meanwhile, when the tracking level is adjusted, a tracking error that the optical signal deviates from the corresponding track and is emitted to a different track can be generated. Therefore, it is preferable that S660 for periodically determining whether such a tracking error is generated is additionally performed.

If it is determined that a tracking error is generated, the optical recording apparatus jumps the optical pickup unit 110 or 210 to its initial track location so as to again search track address information (S620).

If it is determined that no tracking error is generated, the optical recording apparatus successively changes the tracking level by a predetermined width until an LPP ID is detected (operations S640 and S650). Therefore, it is possible to increase a detection probability of track address information in the state of no tracking error.

As described above, according to the present invention, by swinging a tracking level of an optical signal by a predetermined width when a difficulty exists in detecting a logical ID or even when no logical ID is detected, it is possible to correctly detect track address information. That is, in the case where data is recorded in a recording medium allowing over-writing, although track address information is not normally detected due to low quality of written data, it is possible to detect track address information by adjusting a tracking level. Therefore, it is possible to improve data recording performance.

The foregoing embodiment and advantages are merely exemplary and are not to be construed as limiting the present invention. The present teaching can be readily emitted to other types of apparatuses. Also, the description of the embodiments of the present invention is intended to be illustrative, and not to limit the scope of the claims, and many alternatives, modifications, and variations will be apparent to those skilled in the art.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. An optical recording apparatus, comprising:
an optical pickup unit (110,210) which emits an optical signal to a predetermined track on an optical disk and detects reflection light;
an optical pickup controller (140,240) which controls a location of the optical pickup unit (110) so that the optical signal is emitted on the track based upon a predetermined tracking level on the track; and
a track address detector (130,230) which extracts track address information of the track from an electrical signal proportional to light intensity of the reflection light;
**characterized by**:
a controller (150,250) which, if no track address information is detected in a predetermined time by the track address detector (130), changes the tracking level and then controls the optical pickup controller (140) to emit the optical signal a predetermined distance further toward the track address information based upon the changed tracking level.

2. The optical recording apparatus of claim 1, wherein the controller (150,250) controls the optical pickup controller (140,240) to check the track address information, to decide a data recording location on the optical disk based on the track address information, and to emit the optical signal to the data recording location, and to thereby record predetermined recording data in the data recording location.

3. The optical recording apparatus of claim 1 or 2, further comprising:
a tracking error detector (270) which measures a magnitude of the electric signal proportional to the light intensity of the reflection light and determines whether an beam spot of the optical signal deviates from the track based upon the measured result,
wherein, if the tracking error detector (270) determines that the beam spot deviates from the track, the controller (250) controls the optical pickup controller (240) to move the beam spot inside the track.

4. The optical recording apparatus of any preceding claim, wherein the track address information is a wobble signal.

5. The optical recording apparatus of any preceding claim, wherein the track address information is an LPP ID(Land Pre-Pit Identification) recorded by an LPP (Land Pre-Pit) formed on a land track of the optical disk.

6. The optical recording apparatus of claim 5, wherein the controller (150,250) moves the tracking level by a predetermined distance toward the LPP so that the optical signal is emitted to the LPP.

7. The optical recording apparatus of claim 6, further comprising:
a signal processor (120,220) which reproduces data recorded on a groove track of the optical disk from the reflection light,
wherein, if a logic ID indicating an address of the track is included among data reproduced by the signal processor (120,220), the controller (150,250) decides the data recording location using at least one of the logical ID and the LPP ID.

8. The optical recording apparatus of any preceding claim, wherein the track address detector (130,230) comprises:
a first, second, third and fourth amplifiers (131a-d) amplifying detected electrical signals from the optical pick up unit;
a first adder (132) adding the first and second amplified signal;
a second adder (133) adding the third and fourth amplified signal;
a subtractor (134) subtracting a output of the first adder (132) from a output of the second subtract
an LPP(Land Pre-Pit) Data detector (135) receiving an output result of the subtractor (134), comparing the result with a predetermined reference and outputting the comparison result to the controller (150,200).

9. A data recording method, comprising:
emitting an optical signal along a predetermined tracking level on a track of an optical disk and detecting reflection light;
determining whether track address information recorded on the optical disk is detected from the reflection light;
**characterized by**:
changing the tracking level if no track address information is detected;
emitting the optical signal along the changed tracking level a predetermined distance further toward the track address information and determining whether the track address information is detected;
checking the track address information if the track address information is detected; and
deciding a data recording location based on the track address information, and then recording predetermined data in the decided data recording location.

10. The data recording method of claim 9, further comprising:
determining whether a beam spot of the optical signal deviates from the track; and
changing a location to which the optical signal is emitted so that the beam spot is located inside the track if it is determined that the beam spot deviates from the track.

11. The data recording method of claim 9 or 10, further comprising:
processing the reflection light and detecting data recorded on the optical disk;
determining whether an logical ID(Identification) indicating an address of the track is included in the detected data; and
deciding the data recording location using the logical ID if it is determined that the logical ID is included in the detected data.

12. The data recording method of claim 9, 10 or 11, wherein the track address information is an LPP ID(Land Pre-Pit Identification).

13. The data recording method of claim 12, wherein the LPP ID is recorded by an LPP (Land Pre-Pit) formed on a land track of the optical disk.

14. The data recording method of claim 12, wherein, the tracking level is moved by a predetermined distance toward the LPP so that the optical signal is emitted to the LPP.

15. The data recording method of claims 9-14, wherein the track address information is a wobble signal.

## Patentansprüche

1. Optische Aufzeichnungsvorrichtung, enthaltend:
eine optische Abnehmereinheit (110, 210), die ein optisches Signal auf eine vorbestimmte Spur auf einer optischen Platte emittiert und Reflexionslicht erfasst;
eine optische Abnehmer-Steuereinheit (140, 240), die einen Ort der optischen Abnehmereinheit (110) derart steuert, dass das optische Signal auf der Spur basierend auf einem vorbestimmten Spurverfolgungsniveau emittiert wird; und
einen Spuradressdetektor (130, 230), der Spuradressinformationen der Spur aus einem elektrischen Signal proportional zur Lichtintensität des Reflexionslichtes extrahiert;
**gekennzeichnet durch**:
eine Steuereinheit (150, 250), die, wenn keine Spuradressinformationen in einer vorbestimmten Zeit **durch** den Spuradressdetektor (130) erfasst werden, das Spurverfolgungsniveau ändert und anschließend die optische Abnehmer-Steuereinheit (140) derart steuert, dass das optische Signal einen vorbestimmten Abstand weiter hin zu den Spuradressinformationen auf der Basis des geänderten Spurverfolgungsniveaus emittiert wird.

2. Optische Aufzeichnungsvorrichtung nach Anspruch 1, bei dem die Steuereinheit (150, 250) die optische Abnehmer-Steuereinheit (140, 240) derart steuert, dass die Spuradressinformationen geprüft werden, dass ein Datenaufzeichnungsort auf der optischen Platte auf der Basis der Spuradressinformationen festgelegt wird und das optische Signal zum Datenaufzeichnungsort emittiert wird, um **dadurch** vorbestimmte Aufzeichnungsdaten im Datenaufzeichnungsort aufzuzeichnen.

3. Optische Aufzeichnungsvorrichtung nach Anspruch 1 oder 2, weiterhin enthaltend:
einen Spurverfolgungs-Fehlerdetektor (270), der eine Größe des elektrischen Signals proportional zur Lichtintensität des Reflexionslichtes misst und auf der Basis des gemessenen Ergebnisses bestimmt, ob ein Strahlpunkt des optischen Signals von der Spur abweicht,
wobei, wenn der Spurverfolgungs-Fehlerdetektor (270) bestimmt, dass der Strahlpunkt von der Spur abweicht, die Steuereinheit (250) die optische Abnehmer-Steuereinheit (240) derart steuert, dass sie den Strahlpunkt innerhalb der Spur bewegt.

4. Optische Aufzeichnungsvorrichtung nach einem der vorhergehenden Ansprüche, bei der die Spuradressinformationen ein Wobbel-Signal sind.

5. Optische Aufzeichnungsvorrichtung nach einem der vorhergehenden Ansprüche, bei der die Spuradressinformationen ein LPP-ID (Land-Pre-Pit-Kennzeichen) sind, das von einem LPP (Land-Pre-Pit) aufgezeichnet ist, das auf einer Land-Spur der optischen Platte ausgebildet ist.

6. Optische Aufzeichnungsvorrichtung nach Anspruch 5, bei der die Steuereinheit (150, 250) das Spurverfolgungsniveau um einen vorbestimmten Abstand zum LPP bewegt, so dass das optische Signal zum LPP emittiert wird.

7. Optische Aufzeichnungsvorrichtung nach Anspruch 6, weiterhin enthaltend:
einen Signalprozessor (120, 220), der Daten, die auf einer Rillenspur der optischen Platte aufgezeichnet sind, aus dem Reflexionslicht reproduziert,
wobei, wenn ein Logik-ID, das eine Adresse der Spur kennzeichnet, in den Daten enthalten ist, die vom Signalprozessor (120, 220) reproduziert werden, die Steuereinheit (150, 250) über den Datenaufzeichnungsort unter Verwendung des Logik-ID und/oder des LPP-ID entscheidet.

8. Optische Aufzeichnungsvorrichtung nach einem der vorhergehenden Ansprüche, bei der der Spuradressdetektor (130, 230) enthält:
einen ersten, zweiten, dritten und vierten Verstärker (131 a-d), der erfasste elektrische Signale von der optischen Abnehmereinheit verstärkt;
eine erste Addiereinrichtung (132), die das erste und zweite verstärkte Signal addiert;
eine zweite Addiereinrichtung (133), die das dritte und vierte verstärkte Signal addiert;
eine Subtraktionseinrichtung (134), die eine Ausgabe der ersten Addiereinrichtung (132) von einer Ausgabe der zweiten Addiereinrichtung subtrahiert;
einen LPP- (Land-Pre-Pit-) Datendetektor (135), der ein Ausgabeergebnis der Subtraktionseinrichtung (134) empfängt, das Ergebnis mit einem vorbestimmten Bezugswert vergleicht und das Vergleichsergebnis an die Steuereinheit (150, 200) ausgibt.

9. Datenaufzeichnungsverfahren, enthaltend:
Emittieren eines optischen Signals entlang eines vorbestimmten Spurverfolgungsniveaus auf einer Spur einer optischen Platte und Erfassen des Reflexionslichtes;
Bestimmen, ob Spuradressinformationen, die auf der optischen Platte aufgezeichnet sind, aus dem Reflexionslicht erfasst werden;
**gekennzeichnet durch**:
Ändern des Spurverfolgungsniveaus, sofern keine Spuradressinformationen erfasst werden;
Emittieren des optischen Signals entlang des geänderten Spurverfolgungsniveaus einen vorbestimmten Abstand weiter hin zu den Spuradressinformationen und Bestimmen, ob die Spuradressinformationen erfasst werden;
Prüfen der Spuradressinformationen, sofern die Spuradressinformationen erfasst werden; und
Entscheiden über einen Datenaufzeichnungsort auf der Basis der Spuradressinformationen und anschließendes Aufzeichnen vorbestimmter Daten in dem entschiedenen Datenaufzeichnungsort.

10. Datenaufzeichnungsverfahren nach Anspruch 9, weiterhin enthaltend:
Bestimmen, ob ein Strahlpunkt des optischen Signals von der Spur abweicht; und
Ändern eines Ortes, zu dem das optische Signal emittiert wird, so dass sich der Strahlpunkt innerhalb der Spur befindet, sofern bestimmt wird, dass der Strahlpunkt von der Spur abweicht.

11. Datenaufzeichnungsverfahren nach Anspruch 9 oder 10, weiterhin enthaltend:
Verarbeiten des Reflexionslichtes und Erfassen der Daten, die auf der optischen Platte aufgezeichnet sind;
Bestimmen, ob ein Logik-ID (Kennzeichen), das eine Adresse der Spur kennzeichnet, in den erfassten Daten enthalten ist; und
Entscheiden über einen Datenaufzeichnungsort unter Verwendung des Logik-ID, sofern bestimmt wird, dass das Logik-ID in den erfassten Daten enthalten ist.

12. Datenaufzeichnungsverfahren nach Anspruch 9, 10 oder 11, bei dem die Spuradressinformationen ein LPP-ID (Land-Pre-Pit-Kennzeichen) sind.

13. Datenaufzeichnungsverfahren nach Anspruch 12, bei dem das LPP-ID durch ein LPP (Land-Pre-Pit) aufgezeichnet wird, das auf einer Land-Spur der optischen Platte ausgebildet ist.

14. Datenaufzeichnungsverfahren nach Anspruch 12, bei dem das Spurverfolgungsniveau um einen vorbestimmten Abstand zum LPP bewegt wird, so dass das optische Signal zum LPP emittiert wird.

15. Datenaufzeichnungsverfahren nach Anspruch 9-14, bei dem die Spuradressinformationen ein Wobbel-Signal sind.

## Revendications

1. Appareil d'enregistrement optique comprenant:
une unité de lecture optique (110, 210) qui émet un signal optique en direction d'une piste prédéterminée sur un disque optique et qui détecte une lumière de réflexion;
un organe de contrôle de lecture optique (140, 240) qui contrôle un emplacement de l'unité de lecture optique (110) afin que le signal optique soit émis sur la piste en fonction d'un niveau de suivi de piste prédéterminé sur la piste; et
un détecteur d'adresse de piste (130, 230) qui extrait des informations d'adresse de piste de la piste à partir d'un signal électrique proportionnel à une intensité lumineuse de la lumière de réflexion;
**caractérisé par**:
un organe de commande (150, 250) qui, si aucune information d'adresse de piste n'est détectée par le détecteur d'adresse de piste (130) dans un temps prédéterminé, change le niveau de suivi de piste, puis commande l'organe de contrôle de lecture optique (140) pour qu'il émette le signal optique à une distance prédéterminée plus proche des informations d'adresse de piste en fonction du changement de niveau de suivi de piste.

2. Appareil d'enregistrement optique selon la revendication 1, dans lequel l'organe de commande (150, 250) commande l'organe de contrôle de lecture optique (140, 240) pour qu'il vérifie les informations d'adresse de piste, pour qu'il décide d'un emplacement d'enregistrement de données sur le disque optique en fonction des informations d'adresse de piste, et pour qu'il émette le signal optique en direction de l'emplacement d'enregistrement de données, afin d'enregistrer ainsi des données d'enregistrement prédéterminées à l'emplacement d'enregistrement de données.

3. Appareil d'enregistrement optique selon la revendication 1 ou 2, comprenant également:
un détecteur d'erreur de suivi de piste (270) qui mesure une amplitude du signal électrique proportionnelle à l'intensité lumineuse de la lumière de réflexion et qui détermine si un point produit par un faisceau du signal optique dévie ou non par rapport à la piste en fonction du résultat mesuré,
dans lequel, si le détecteur d'erreur de suivi de piste (270) détermine que le point produit par le faisceau dévie par rapport à la piste, l'organe de commande (250) commande l'organe de contrôle de lecture optique (240) pour qu'il déplace le point produit par le faisceau à l'intérieur de la piste.

4. Appareil d'enregistrement optique selon l'une quelconque des revendications précédentes, dans lequel les informations d'adresse de piste consistent en un signal d'oscillation.

5. Appareil d'enregistrement optique selon l'une quelconque des revendications précédentes, dans lequel les informations d'adresse de piste consistent en une LPP ID (identification par microcuvette prégravée de plat) enregistrée par une LPP (microcuvette prégravée de plat) formée sur une piste de plat du disque optique.

6. Appareil d'enregistrement optique selon la revendication 5, dans lequel l'organe de commande (150, 250) déplace le niveau de suivi de piste d'une distance prédéterminée vers la LPP afin que le signal optique soit émis en direction de la LPP.

7. Appareil d'enregistrement optique selon la revendication 6, comprenant également:
un processeur de signal (120, 220) qui reproduit des données enregistrées sur une piste de sillon du disque optique à partir de la lumière de réflexion,
dans lequel, si une identification (ID) logique indiquant une adresse de la piste est incluse dans les données reproduites par le processeur de signal (120, 220), l'organe de commande (150, 250) décide de l'emplacement d'enregistrement de données à l'aide de l'ID logique et/ou de la LPP ID.

8. Appareil d'enregistrement optique selon l'une quelconque des revendications précédentes, dans lequel le détecteur d'adresse de piste (130, 230) comprend:
des premier, deuxième, troisième et quatrième amplificateurs (131a-d) qui amplifient des signaux électriques détectés provenant de l'unité de lecture optique;
un premier additionneur (132) qui additionne les premier et deuxième signaux amplifiés;
un second additionneur (133) qui additionne les troisième et quatrième signaux amplifiés;
un soustracteur (134) qui soustrait d'une sortie du second additionneur (133) une sortie du premier additionneur (132);
un détecteur de données de LPP (microcuvette prégravée de plat) (135) qui reçoit un résultat de sortie du soustracteur (134), qui compare le résultat avec une référence prédéterminée et qui délivre le résultat de la comparaison à l'organe de commande (150, 200).

9. Procédé d'enregistrement de données comprenant:
l'émission d' un signal optique suivant un niveau de suivi de piste prédéterminé sur une piste d'un disque optique et la détection d'une lumière de réflexion;
la détermination du fait que des informations d'adresse de piste enregistrées sur le disque optique sont détectées ou non à partir de la lumière de réflexion:
**caractérisé par**:
la modification du niveau de suivi de piste si aucune information d'adresse de piste n'est détectée;
l'émission du signal optique suivant le niveau de suivi de piste modifié à une distance prédéterminée plus proche des informations d'adresse de piste et la détermination du fait que les informations d'adresse de piste sont détectées ou non;
la vérification des informations d'adresse de piste si ces dernières sont détectées; et
la décision d'un emplacement d'enregistrement de données en fonction des informations d'adresse de piste, puis l'enregistrement de données prédéterminées à l'emplacement d'enregistrement de données décidé.

10. Procédé d'enregistrement de données selon la revendication 9, comprenant également:
la détermination du fait qu'un point produit par un faisceau du signal optique dévie ou non par rapport à la piste; et
le changement d'un emplacement en direction duquel le signal optique est émis afin que le point produit par le faisceau soit situé à l'intérieur de la piste, s'il est déterminé que le point produit par le faisceau dévie par rapport à la piste.

11. Procédé d'enregistrement de données selon la revendication 9 ou 10, comprenant également:
le traitement de la lumière de réflexion et des données détectées enregistrées sur le disque optique;
la détermination du fait qu'une ID (identification) logique indiquant une adresse de la piste est ou non incluse dans les données détectées; et
la décision de l'emplacement d'enregistrement de données à l'aide de l'ID logique s'il est déterminé que l'ID logique est incluse dans les données détectées.

12. Procédé d'enregistrement de données selon la revendication 9, 10 ou 11, dans lequel les informations d'adresse de piste consistent en une LPP ID (identification par microcuvette prégravée de plat).

13. Procédé d'enregistrement de données selon la revendication 12, dans lequel la LPP ID est enregistrée par une LPP (microcuvette prégravée de plat) formée sur une piste de plat du disque optique.

14. Procédé d'enregistrement de données selon la revendication 12, dans lequel le niveau de suivi de piste est déplacé d'une distance prédéterminée vers la LPP afin que le signal optique soit émis en direction de la LPP.

15. Procédé d'enregistrement de données selon l'une quelconque des revendications 9 à 14, dans lequel les informations d'adresse de piste consistent en un signal d'oscillation.
